# EUROPÄISCHE PATENTANMELDUNG

(11) **EP 0 625 381 A1**
(43) Veröffentlichungstag der Anmeldung: **23.11.1994**
(21) Anmeldenummer: 94100821.1
(22) Anmeldetag: 20.01.1994
(51) Int. Cl.: B08B 7/00, B08B 3/02, B29C 47/08

(54) **Verfahren und Vorrichtung zum Reinigen von Teilen von Kunststoffverarbeitungsmaschinen**

(30) Priorität: 28.01.1993 DE 4302415
(71) Anmelder: Caroline Christ, abgasfreie Werkzeugreinigungsapparate für die Kunststoffindustrie, D-80687 München (DE)
(72) Erfinder: Schmidt, Rudolf, D-80687 München (DE)
(74) Vertreter: Prietsch, Reiner, Dipl.-Ing.

(57) **Zusammenfassung**

Ein Verfahren und eine Vorrichtung zum Reinigen insbesondere von Spritz- oder Blasköpfen von Kunststoffverarbeitungsmaschinen, bei dem diese Teile in ein erhitztes Wärmeträgermedium in einer Behandlungskammer eingebracht werden, führt zu einer erheblichen Reduzierung der Reinigungszeit, wenn der Behandlungskammer (3) ein Teil des Wärmeträgermediums (5) entnommen, mittels einer Pumpe (22) unter Druck gesetzt, wieder in die Kammer (3) eingeleitet und dort als gebündelter Strahl auf das zu reinigende Teil (30) gerichtet wird. Dabei sollte der Strahl des Wärmeträgermediums auf mindestens eine Bohrungs- oder Kanalöffnung in dem zu reinigenden Teil (30) ausgerichtet sein.

## Beschreibung

Die Erfindung betrifft ein Verfahren der im Oberbegriff des Anspruches 1 angegebenen Art sowie eine Vorrichtung der im Oberbegriff des Anspruches 4 angegebenen Art.

Ein Verfahren und eine Vorrichtung dieser Gattung sind aus der EP-A2-0 343 413 bekannt. Die von Kunststoffresten zu befreienden Teile werden in eine Behandlungskammer in einem wärmeisolierten Behandlungsbehälter eingebracht. In der Behandlungskammer befindet sich ein flüssiges Wärmeträgermedium, das mittels einer Heizvorrichtung auf eine über der Schmelztemperatur des jeweiligen Kunststoffes liegende Temperatur erhitzt wird. Zur Erzielung einer gleichmäßigen Temperaturverteilung und zur Verkürzung der Behandlungsdauer wird das Wärmeträgermedium mittels einer in dieses eintauchenden Flügelradpumpe umgewälzt. Hierzu ist die Behandlungskammer in einen Hauptraum und eine rohrförmige Pumpenkammer unterteilt, deren Achse parallel zu der Mittelachse des Hauptraumes verläuft und die mit letzterem über einen oberen Kanal und einen unteren Kanal verbunden ist. Die Behandlungskammer ist durch einen Deckel verschlossen, der ein Aktivkohlefilter trägt. Oberhalb des Spiegels des Wärmeträgermediums kann während der Behandlung bzw. Reinigung eine Schutzgasatmosphäre z.B. eine Stickstoffatmosphäre, geschaffen werden um einer vorzeitigen Alterung des Wärmeträgermediums durch Oxydation vorzubeugen.

Bei den von anhaftenden Kunststoffresten zu befreienden Teilen von Kunststoffverarbeitungsmaschinen handelt es sich überwiegend um Spritzköpfe, Blasköpfe, Spritz/Blasköpfe, Verteiler, Düsen usw., also Teile, die Bohrungen und/oder Kanäle aufweisen, welche zumindest teilweise mit erstarrtem Kunststoff gefüllt sind. Teile mit langen und/oder kompliziert verlaufenden Bohrungen oder Kanälen erfordern deshalb entsprechend lange Behandlungszeiten oder müssen vor der Reinigung zerlegt und anschließend wieder zusammengebaut werden, was nicht nur zeit- sondern auch arbeitsaufwendig ist. Eine Reinigungsvorrichtung mit Reinigungsdüse, jedoch ohne eigentliche Behandlungskammer, ist für Bohrungen oder Kanäle aufweisende Teile von Kunststoffmaschinen nach der WO 91/12 124 an sich bekannt.

Der Erfindung liegt die Aufgabe zugrunde, das Verfahren und die Vorrichtung der jeweils einleitend angegebenen Gattung in der Weise zu verbessern, daß sich die Reinigungszeit erheblich verkürzt, vor allem für kompliziert geformte Teile wie Einfach- oder Mehrfachspritz- oder Blasköpfe, ohne daß diese zerlegt werden müssen.

Verfahrensmäßig ist diese Aufgabe dadurch gelöst, daß der Behandlungskammer ein Teil des Wärmeträgermediums entnommen, mittels einer Pumpe unter Druck gesetzt, wieder in die Kammer eingeleitet und dort als gebündelter Strahl auf das zu reinigende Teil gerichtet wird.

Es hat sich gezeigt, daß durch die Erzeugung eines auf das zu reinigende Teil gerichteten Strahls des Wärmeträgermediums die Zeit bis zur vollständigen Reinigung des betreffenden Teils (Werkstücks) im Vergleich zu dem Verfahren nach dem Stand der Technik erheblich abgekürzt wird, weil der Strahl den plastisch werdenden oder sich verflüssigenden Anteil des fortschreitend von außen nach innen erweichenden Kunststoffs jeweils sofort wegspült. Dies gilt sowohl für kleine Werkstücke wie z.B. Düsen als auch insbesondere für große Werkstücke wie Spritz- und Blasköpfe.

Eine Verbesserung des Verfahrens besteht darin, daß ein Anteil von ca. 5 bis 15% des entnommenen Teils des Wärmeträgermediums in einem Bypasskreis auf eine unter die Schmelztemperatur des Kunststoffs liegende Temperatur gekühlt, gefiltert und dann in die Behandlungskammer zurückgeführt wird.

In weiterer Ausgestaltung des Verfahrens ist vorgesehen, daß die Kühlung in dem Bypasskreis indirekt, nämlich über einen Sekundärkühlkreis, erfolgt.

Vorrichtungsmäßig ist die Aufgabe der Erfindung dadurch gelöst, daß die Pumpe außerhalb der Kammer angeordnet ist, Wärmeträgermedium aus der Kammer ansaugt und druckseitig mit einer Druckleitung verbunden ist, die in der Kammer in einem Schlauch endet, dessen Mündung auf ein zu reinigendes Teil gerichtet und in dieser Stellung fixierbar ist.

Die Verwendung eines Schlauches erlaubt es dabei, dessen Mündung in Abhängigkeit von der Form und Größe des zu reinigenden Teils (Werkstücks) in die für eine rasche Reinigung jeweils günstigste Stellung zu bringen.

Eine bevorzugte Ausführungsform der Vorrichtung, die vor allem zum Reinigen von Teilen mit Durchgangsbohrungen und/oder Kanälen geeignet ist, zeichnet sich dadurch aus, daß die Mündung des Schlauches in einer auf mindestens eine Bohrungs- oder Kanalöffnung gerichteten Stellung fixierbar, alternativ auch unmittelbar und ohne Freilassung eines Spaltes direkt mit dem Werkstück verbindbar ist.

Um sicherzustellen, daß die von Kunststoff zu befreiende Bohrung (oder die Bohrungen) des Werkstücks gegen Ende des Reinigungsvorganges vollständig mit dem Wärmeträgermedium durchgespült werden, empfiehlt es sich, die Behandlungskammer mit einem Gitterboden zu versehen. Das Werkstück kann dann so positioniert werden, daß sowohl die Eintrittsöffnung als auch die Austrittsöffnung der zu reinigenden Bohrung (Bohrungen) freiliegen.

Aus Gründen der Temperaturbeständigkeit ist die Verwendung eines Schlauches in Form eines Metallwellschlauches zu bevorzugen.

Zur Erzeugung eines gerichteten Strahls des Wärmeträgermediums bedarf es eines gewissen Mindestdrucks. Andererseits darf der Druck einen Höchstwert nicht überschreiten, unter anderem um in der Behandlungskammer keine zu starken Turbulenzen zu erzeugen. Auch sollen sich kleinere Werkstücke nicht unter dem Druck des Strahles in der Behandlungskammer bewegen. Der zweckmäßige Druckbereich läßt sich durch Verwendung einer entsprechenden Pumpe einhalten. Statt dessen kann aber auch in der Druckleitung ein einstellbares Druckminderventil, ggf. auch eine einfache Drossel angeordnet werden.

Sofern die Mündung des Schlauches sich in geringem Abstand von dem zu reinigenden Teil gegenüber einer Öffnung (oder mehreren Öffnungen) einer freizuspülenden Durchgangsbohrung befindet oder sogar an dieser Stelle mit dem Werkstück fest verbunden ist, baut sich zu Anfang, solange noch kein oder nur ein sehr geringer Durchfluß an Wärmeträgermedium durch das zu reinigende Teil möglich ist, ein erhöhter Druck auf. Es gibt mehrere, an sich bekannte Möglichkeiten, diesen Anfangsdruck auf einen vorgegebenen Höchstwert zu beschränken. Eine sehr einfache Möglichkeit besteht darin, von der Druckleitung eine in die Kammer mündende, ein Überströmventil mit einstellbarem Druckwert enthaltende Überströmleitung abzweigen zu lassen.

Alternativ oder zusätzlich kann in die Druckleitung ein Druckminderventil (Regelventil) eingebaut werden.

Das von der Pumpe aus der Kammer angesaugte Wärmeträgermedium führt einen mit fortschreitender Reinigung größer werdenden Anteil flüssigen Kunststoffs mit sich. Sofern die Temperatur des Wärmeträgermediums auf einem nur wenig über dem Schmelzpunkt des betreffenden Kunststoffs liegenden Wert gehalten wird, kann der mitgeführte Kunststoff sehr einfach dadurch abgeschieden werden, daß in der Druckleitung ein 3-Wege-Ventil angeordnet wird, dessen dritter Anschluß mit einer Bypassleitung verbunden ist, die über ein Filter geführt ist. Da sich das Wärmeträgermedium in dem außerhalb der Behandlungskammer liegenden Teil des Kreislaufes abkühlt, wird der Kunststoff dann in dem Filter abgeschieden.

Der Abscheidegrad läßt sich jedoch erheblich verbessern, wenn die Bypassleitung über einen dem Filter vorgeschalteten oder mit diesem baulich vereinigten Kühler geführt wird.

Der aus den erwähnten Gründen anfänglich höhere Druck in der Druckleitung würde allerdings dazu führen, daß sich in der Anfangsphase des Reinigungsprozesses die Strömungsrichtung in der Bypassleitung umkehrt, also das Filter unbeabsichtigt von rückwärts abgereinigt würde. Um dies zu verhindern, ist in der Bypassleitung stromab von dem Filter ein Rückschlagventil angeordnet.

Als Kühlmittel wird vorzugsweise Wasser verwendet. Um im Fall von Undichtigkeiten im Bereich des Kühlers eine Verschmutzung des Wasser zu vermeiden, ist vorgesehen, daß die Kühlmittelanschlüsse des Kühlers mit Kühlmittel aus einem Sekundärkühlkreis versorgt werden, der eine Umwälzpumpe, ein Druckausgleichsgefäß und einen Sekundärkühler umfaßt, der seinerseits mit Wasser als Sekundärkühlmittel arbeitet.

Um sicherzustellen, daß der Druck in der Druckleitung an der Einmündung der Bypassleitung niedriger als der Druck im letzten Abschnitt der Bypassleitung ist, kann in die Druckleitung stromauf von dieser Einmündung ein Drossel- oder Druckminderventil 25 eingebaut werden.

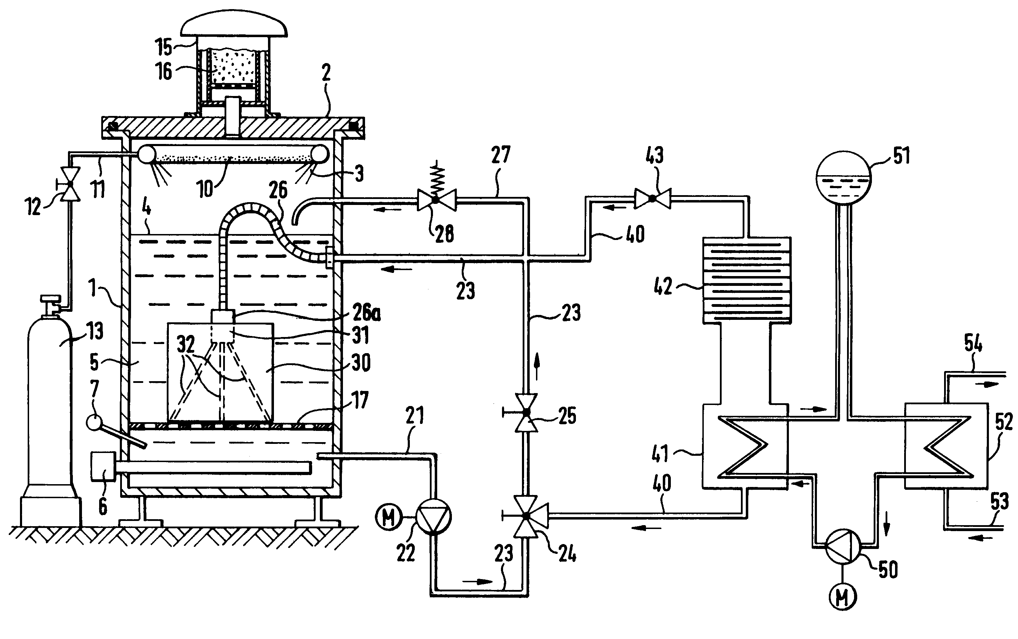

Das Verfahren und die Vorrichtung nach der Erfindung werden nachfolgend anhand der Zeichnung näher erläutert. Diese zeigt ein Ausführungsbeispiel in schematischer Vereinfachung.

Die Vorrichtung umfaßt einen Behandlungsbehälter 1 mit einem dicht schließenden Deckel 2. Behälter und Deckel sind wärmeisoliert. Die Wärmeisolation ist nicht dargestellt. In dem Behälter 1 befindet sich eine Behandlungskammer 3, die bis zur Höhe des Pegels 4 mit einem Wärmeträgermedium 5 gefüllt ist. Das Wärmeträgermedium 5 läßt sich mittels einer durch den Heizstab 6 symbolisierten Heizvorrichtung auf eine Temperatur erwärmen, die mittels eines Temperaturfühlers 7 und einer üblichen, nicht dargestellten Regelschaltung auf einen vorgegebenen Wert eingestellt und gehalten werden kann.

Der Raum in der Kammer 3 oberhalb des Pegels 4 des Wärmeträgermediums kann unter Schutzgas, beispielsweise Stickstoff, gesetzt werden. Hierzu dient ein mit entsprechenden Ausströmöffnungen versehenes Rohr 10, das über eine Leitung 11 mit Ventil 12 aus einer Gasflasche 13 versorgt wird. Die durch Einleiten des Schutzgases und/oder Erwärmung des Wärmeträgermediums 5 verdrängte Luft kann über eine auf dem Deckel 2 montierte Filtervorrichtung 15, die beispielsweise mit Aktivkohle 16 gefüllt ist, entweichen.

Vom unteren Teil des Behälters 1 führt eine Saugleitung 21 zu einer motorisch angetriebenen Pumpe 22, deren Ausgang mit einer Druckleitung 23 verbunden ist, die über den ersten Ausgangsanschluß eines 3-Wege-Ventils 24 sowie ein einstellbares Drossel- oder Druckminderventil 25 zurück in den Behälter 1 und dort zu einem Metallwellschlauch 26 führt.

Als zu reinigendes Teil oder Werkstück ist in der Zeichnung symbolisch ein Spritzkopf 30 dargestellt, der als Dreifachwerkzeug ausgebildet ist und dementsprechend eine Eintrittsöffnung 31 für den Kunststoff und drei Durchgangsbohrungen 32 hat. Zu Beginn der Reinigung sind die Eintrittsöffnung 31 und die Durchgangsbohrungen 32 zumindest teilweise mit erstarrtem Kunststoff gefüllt. Das Werkstück 30 ruht auf einer in der Kammer 3 auf einem Gitterrost 17, und zwar so, daß die bezogen auf die Fließrichtung des Kunststoffes in dem Werkstück 30 ausgangseitigen Öffnungen der Durchgangsbohrungen 32 frei sind.

Der Schlauch 26 hat ein Mündungsstück 26a, das in der Eintritts- oder Bohrungsöffnung 31 des Werkstückes 30 in geeigneter Weise mechanisch fixiert ist. Das Mündungsstück 26a kann auswechselbar an dem Ende des Schlauchs 26 befestigt sein, so daß zu den unterschiedlich ausgestalteten Öffnungen der jeweils zu behandelnden Werkstücke 30 passende Mündungsstücke 26a ("Adapter") angebracht werden können.

Die im Ausführungsbeispiel dargestellte, feste Verbindung zwischen dem Mündungsstück 26a und dem Werkstück 30 muß bei anderen zu reinigenden Teilen nicht notwendigerweise vorhanden sein. Insbesondere bei Teilen, die freiliegende Oberflächen aufweisen, die von Kunststoff zu befreien sind, oder die Sacklöcher haben, aus denen der Kunststoff herausgespült werden muß, ist es zweckmäßiger, das Mündungsstück 26a des Schlauches 26 mittels einer geeigneten Hilfsvorrichtung (nicht dargestellt) in einer Stellung zu fixieren, in der der aus der Mündung austretende Strahl des Wärmeträgermediums aus geringer Entfernung auf die zu reinigenden Flächen oder Öffnungen gerichtet ist. Das gleiche gilt, wenn die abzureinigenden Teile relativ klein sind, und/oder Bohrungen bzw. Kanäle mit großen Querschnitten haben.

Von der Druckleitung 23 stromab des Drosselventils 25 zweigt eine Überströmleitung 27 ab, die ein einstellbares Überdruckventil 28 enthält und in die Kammer 1 oberhalb des Pegels 4 des Wärmeträgermediums 5 mündet.

Von dem zweiten Anschluß des 3-Wege-Ventils 24 führt eine Bypassleitung 40 zu einem Kühler 41, der eine bauliche Einheit mit einem Filter 42, z.B. einem Siebfilter, bildet, sowie über ein Rückschlagventil 43 zurück zu der Druckleitung 23 stromab von dem Drosselventil 25.

Da die Temperatur des Wärmeträgermediums 300°C und mehr betragen kann, ist der Kühler 41 als Primärkühler ausgebildet. Seine Kühlmittelanschlüsse liegen in einem Sekundärkühlkreis, der ein geeignetes Kühlmedium enthält, das mittels einer motorisch angetriebenen Pumpe 50 über den Kühler 41, ein Druckausgleichsgefäß 51 und einen Sekundärkühler 52 umgewälzt wird, der seinerseits mit Wasser als Kühlmittel arbeitet, das über die Leitung 53 zugeführt wird und über die Leitung 54 abströmt.

Die Vorrichtung arbeitet wie folgt:
Das zu reinigende Werkstück 30 wird auf dem Gitterrost 17 abgesetzt. Zuvor oder anschließend wird das Mündungsstück 26a des Metallwellschlauches 26 in der für die Entfernung der Kunststoffreste günstigsten Stellung fixiert oder mit dem Werkstück 30 verbunden. Nach dem Schließen des Deckels 2 und dem Öffnen des Ventils 12 zur Erzeugung einer Schutzgasatmosphäre oberhalb des Wärmeträgermediums 5 wird dieses auf einen vorwählbaren Sollwert, der insbesondere auch von der Art des zu entfernenden Kunststoffes abhängig ist, erhitzt. Da eine gleichmäßige Erhitzung des Wärmeträgermediums und des Werkstückes 30 wichtig ist, wird die Erhitzung über einen Regler gesteuert, der von dem Temperaturfühler 7 den jeweiligen Temperatur-Istwert erhält. Der Regler sollte so programmiert sein, daß die Temperaturzunahme je Zeiteinheit konstant bleibt (Gradientenregelung).

Nach Erreichen der Erweichungstemperatur des zu entfernenden Kunststoffes schaltet der Regler die Pumpe 22 ein, die über die (in der Praxis als Steigrohr ausgeführte) Saugleitung 21 das Wärmeträgermedium ansaugt und über die Druckleitung 23, das 3-Wege-Ventil 24, das Drosselventil 25 das Wärmeträgermedium in den Schlauch 26 drückt. Wenn das Mündungsstück 26 unmittelbar mit dem Werkstück 30 verbunden ist oder diesem in geringem Abstand gegenübersteht, bewirkt der zu Beginn des Reinigungsvorganges noch reichlich vorhandene Kunststoff auf der Oberfläche des Werkstückes und/oder in dessen Bohrungen, daß nur wenig Wärmeträgermedium aus dem Mündungsstück 26a ausströmen kann. Daher baut sich in der Druckleitung 23 ein verhältnismäßig hoher Druck auf. Wenn dieser Druck den Wert überschreitet, auf den das Überströmventil 28 eingestellt ist, öffnet dieses, so daß das gepumpte Wärmeträgermedium vollständig oder zumindest zum überwiegenden Teil über die Überströmleitung 27 in die Kammer 3 zurückgeführt wird.

Der im weiteren Verlauf der Erwärmung zunehmend erweichende und schließlich schmelzende Kunststoff wird mehr und mehr durch das aus dem Mündungsstück 26a austretende Wärmeträgermedium weggespült. Entsprechend den größer werdenden Querschnitten erhöht sich der Durchfluß des Wärmeträgermediums in der Druckleitung 23. Gleichzeitig sinkt der Druck entsprechend. Somit schließt das Überdruckventil 28. Das gesamte, von der Pumpe 22 geformte Wärmeträgermedium strömt dann durch den Schlauch 26.

Ein großer Teil des abgetragenen Kunststoffs ist in dem Wärmeträgermedium fein dispergiert. Wenn der Reinigungsprozeß weit genug fortgeschritten ist, wird das 3-Wege-Ventil 24 programmgesteuert so umgeschaltet, daß ein Anteil von z.B. 5 bis 15% des angesaugten Wärmeträgermediums über den zweiten Anschluß des 3-Wege-Ventils 24 in die Bypassleitung 40 eingespeist wird. Dieser Anteil durchströmt dann den Kühler 41, wird dort so weit abgekühlt, daß der Kunststoff ausfällt und strömt dann mit dem suspendierten Kunststoff weiter durch den Filter 42, der den ausgefällten Kunststoff zurückhält. Über das Rückschlagventil 43 kehrt das Wärmeträgermedium in den Hauptstrom zurück. Das Drosselventil 25 ist so eingestellt, daß an der Einmündungsstelle der Bypassleitung 40 in die Druckleitung 23 ein Druck herrscht, der unter dem im letzten Abschnitt der Bypassleitung 40 herrschenden Druck liegt, also kleiner ist als der am zweiten Ausgang des 3-Wege-Ventils 24 vorhandene Druck abzüglich des in dem Bypasskreis insgesamt auftretenden Druckabfalls, da andernfalls der abgezweigte Anteil des Wärmeträgermediums nicht durch den Bypasskreis zirkulieren könnte. Eine spezielle Konstruktion des 3-Wege-Ventils, bei der die Drücke am ersten Ausgang (im Hauptkreis) und am zweiten Ausgang (im Bypasskreis) unabhängig voneinander eingestellt und gleichzeitig die gewünschte Mengenaufteilung vorgenommen werden können, kann das Drosselventil 25 entbehrlich machen.

## Patentansprüche

1. Verfahren zum Reinigen solcher Teile von Kunststoffverarbeitungsmaschinen, an denen Kunststoffreste anhaften, durch Einbringen der Teile in ein über die Schmelz- oder Zersetzungstemperatur der Kunststoffteile erhitztes Wärmeträgermedium in einer Behandlungskammer und durch Spülen der Teile mit diesem Wärmeträgermedium, dadurch gekennzeichnet, daß der Behandlungskammer ein Teil des Wärmeträgermediums entnommen, mittels einer Pumpe unter Druck gesetzt, wieder in die Kammer eingeleitet und dort als gebündelter Strahl auf das zu reinigende Teil gerichtet wird.

2. Verfahren nach Anspruch 1, dadurch gekennzeichnet, daß ein Anteil von ca. 5 bis 15% des entnommenen Teils des Werbeträgermediums in einem Bypasskreis auf eine unter der Schmelztemperatur des Kunststoffs liegende Temperatur gekühlt, gefiltert und dann wieder zurück in die Behandlungskammer geleitet wird.

3. Verfahren nach Anspruch 2, dadurch gekennzeichnet, daß die Kühlung des Wärmeträgermediums in dem Bypasskreis indirekt, nämlich über einen Sekundärkühlkreis, erfolgt.

4. Vorrichtung zum Reinigen solcher Teile von Kunststoffverarbeitungsmaschinen, an denen Kunststoffreste anhaften, bestehend aus einem die Teile in einer Behandlungskammer (3) aufnehmenden, geschlossenen Behandlungsbehälter (1) mit einer Heizvorrichtung (6), die ein flüssiges Wärmeträgermedium (5) in der Kammer (3) auf eine über der Schmelz- oder Zersetzungstemperatur des an den zu reinigenden Teilen haftenden Kunststoffs liegende Temperatur erhitzt, sowie mit einer das Wärmeträgermedium (5) in der Kammer (3) umwälzenden Pumpe, dadurch gekennzeichnet, daß die Pumpe (22) außerhalb der Kammer (3) angeordnet ist, Wärmeträgermedium (5) aus der Kammer ansaugt und druckseitig mit einer Druckleitung (23) verbunden ist, die in der Kammer in einem Schlauch (26) endet, dessen Mündung (26a) auf ein zu reinigendes Teil (30) gerichtet und in dieser Stellung fixierbar ist.

5. Vorrichtung nach Anspruch 4, für ein zu reinigendes Teil, das Kanäle (31) und/oder Durchgangsbohrungen (32) aufweist, die Kunststoffreste enthalten, dadurch gekennzeichnet, daß die Mündung (26a) des Schlauches (26) in einer auf mindestens eine Bohrungs- oder Kanalöffnung in dem zu reinigenden Teil (30) gerichteten Stellung fixierbar ist.

6. Vorrichtung nach Anspruch 4 oder 5, dadurch gekennzeichnet, daß die Mündung (26a) des Schlauches (26) mit dem zu reinigenden Teil (30) im Bereich mindestens einer dessen Kanal- oder Bohrungsöffnungen (31) verbindbar ist.

7. Vorrichtung nach einem der Ansprüche 4 bis 6, dadurch gekennzeichnet, daß der Schlauch ein Metallwellschlauch (26) ist.

8. Vorrichtung nach einem der Ansprüche 4 bis 7, dadurch gekennzeichnet, daß die Kammer (3) einen Gitterboden (17) enthält, auf dem das zu reinigende Teil (30) aufliegt.

9. Vorrichtung nach einem der Ansprüche 4 bis 8, dadurch gekennzeichnet, daß von der Druckleitung eine in die Kammer mündende, ein einstellbares Überströmventil enthaltende Überströmleitung abzweigt.

10. Vorrichtung nach einem der Ansprüche 4 bis 9, dadurch gekennzeichnet, daß in der Druckleitung (23) ein einstellbares Druckminderventil angeordnet ist.

11. Vorrichtung nach einem der Ansprüche 4 bis 9, dadurch gekennzeichnet, daß in der Druckleitung (23) ein 3-Wege-Ventil (24) angeordnet ist, dessen dritter Anschluß mit einer Bypassleitung (40) verbunden ist, die über ein Filter (42) zum Abscheiden von abgereinigtem Kunststoff geführt ist.

12. Vorrichtung nach Anspruch 11, dadurch gekennzeichnet, daß die Bypassleitung (40) über einen dem Filter (42) vorgeschalteten oder mit diesem baubaulich vereinigten Kühler (41) geführt ist.

13. Vorrichtung nach Anspruch 11 oder 12, dadurch gekennzeichnet, daß in der Bypassleitung (40) stromab von dem Filter (42) ein Rückschlagventil (43) angeordnet ist.

14. Vorrichtung nach einem der Ansprüche 11 bis 13, dadurch gekennzeichnet, daß in der Druckleitung (23) zwischen dem 3-Wege-Ventil und der Einmmündung der Bypassleitung (40) ein Drossel- oder Druckminderventil (25) angeordnet ist.

15. Vorrichtung nach einem der Ansprüche 12 bis 14, dadurch gekennzeichnet, daß der Kühler (41) in einem Sekundärkühlkreis liegt, der des weiteren eine Umwälzpumpe (50), ein Druckausgleichsgefäß (51) und einen Sekundärkühler (52) umfaßt, der seinerseits mit Wasser als Sekundärkühlmittel arbeitet.
